# EUROPÄISCHE PATENTSCHRIFT

(11) **EP 0 969 187 B1**
(45) Veröffentlichungstag und Bekanntmachung des Hinweises auf die Patenterteilung: **10.04.2002**
(21) Anmeldenummer: 98112219.5
(22) Anmeldetag: 02.07.1998
(51) Int. Cl.: F01N 3/20

(54) **Kraftfahrzeug mit einer Verbrennungskraftmaschine und Katalysator**
Motor vehicle with an internal combustion engine and catalytic converter
Véhicule automobile avec moteur à combustion interne et pot catalytique

(43) Veröffentlichungstag der Anmeldung: 05.01.2000
(73) Patentinhaber: Ford Global Technologies, Inc., Dearborn, Michigan 48126-2490 (US)
(72) Erfinder: Phlips, Patrick, 50858 Koeln (DE)
(74) Vertreter: Drömer, Hans-Carsten, Dipl.-Ing.

(56) Entgegenhaltungen:
- DE-A- 3 439 998
- DE-A- 4 218 834
- DE-C- 19 651 239
- US-A- 3 757 521
- US-A- 3 844 119
- PATENT ABSTRACTS OF JAPAN vol. 096, no. 005, 31. Mai 1996 & JP 08 028253 A (TOYOTA MOTOR CORP), 30. Januar 1996
- PATENT ABSTRACTS OF JAPAN vol. 017, no. 346 (M-1437), 30. Juni 1993 & JP 05 044454 A (MITSUBISHI HEAVY IND LTD), 23. Februar 1993

## Beschreibung

Die Erfindung betrifft ein Kraftfahrzeug mit einer Verbrennungskraftmaschine bei der die Abgase über einen Katalysator geführt werden, wobei die Abgasleitungen der einzelnen Zylinder in einer Sammelleitung zusammengefaßt sind, von der zwei Zuleitungen mit insbesondere unterschiedlichem Querschnitt zum Katalysator führen. Eine der Zuleitungen weist zum Katalysator hin eine größere Leitungslänge auf und ist durch ein Ventil absperrbar.

Eine Anordnung ähnlicher Art geht aus der DE-OS 42 18 834 hervor. Hier ist bei einem in einem Kraftfahrzeug quer angeordneten Reihenmotor die Anordnung so getroffen, daß zwei Leitungen mit gleicher Länge, aber unterschiedlichem Querschnitt, von der Verbrennungskraftmaschine unmittelbar zum im hinteren Bereich des Kraftfahrzeuges angeordneten Katalysator geführt werden. In der Leitung mit dem größeren Querschnitt ist ein Absperrventil vorgesehen, wodurch in der Aufwärmphase die Leitung mit dem größeren Querschnitt abgesperrt und die Abgase lediglich durch die Leitung mit dünnerem Querschnitt dem Katalysator zugeführt werden.

In DE 196 51 239 vorgesehen, bei zwei unterschiedlichen Zuleitungen der Abgase zum Katalysator die Zuleitungen in der Länge unterschiedlich auszubilden.

Bei der Magerverbrennung entsteht durch die relativ hohe Temperatur in der Reaktionszone verstärkt Nox. Die Spaltung von N2 und damit auch die NOx-Bildung nimmt exponentiell mit der Temperatur zu. Auch bei Benzin-Direkteinspritzung kann durch Abgasrückführung die Verbrennungstemperatur und damit der NOx-Anteil verringert werden.

Aufgabe der Erfindung war es, einerseits eine rasche Aufheizung des Katalysators nach einem Start der Verbrennungskraftmaschine sicherzustellen, ohne daß bei Dauerbetrieb des Kraftfahrzeuges die notwendige Kühlung für die Zuleitung der Abgase zum Katalysator unterbleibt. Andererseits soll bei Benzin-Verbrennungskraftmaschinen, die Magerverbrennungsverfahren anwenden, der NOx-Anteil durch eine kostruktive Gestaltung des Abgasrückführungsystems weiter verringert werden.

Diese Aufgabe wird dadurch gelöst, daß die Zuleitungen für die Abgase zum Katalysator unterschiedliche Längen aufweisen, wobei die Zuleitung mit der größeren Leitungslänge einen bogenförmigen Bereich aufweist und daran anschließend entgegen der Fahrtrichtung zu dem unterhalb des Passagierraumes angeordneten Katalysator verläuft, wobei die andere Zuleitung eine kurze Verbindung zwischen einem Bereich der Sammelleitung und einem dem Katalysator benachbarten Bereich der Abgasleitung herstellt und wobei von der längeren Zuleitung wenigstens eine Abgasrückführungsleitung abzweigt.

Durch diese Anordnung wird erreicht, daß das sogenannte Package innerhalb des Kraftfahrzeuges für die Abgasleitung und den Katalysator positiv gelöst werden kann; die Zuleitung mit der größeren Leitungslänge liegt in einem Bereich des Kraftfahrzeuges, in dem eine optimale Kühlung möglich ist. Trotzdem wird bei einer Inbetriebnahme des Kraftfahrzeuges durch Absperren der Zuleitung mit größerem Querschnitt die andere Zuleitung für eine rasche Aufheizung des Katalysators sorgen. Durch die Entnahme des Abgases aus einer Stelle der längeren Zuleitung wird bei allen Betriebsarten ein Abgas mit einer verringerten Temperatur entnommen. Mit diesem "gekühlten" Abgas kann die Verbrennungstemperatur weiter verringert werden. Außerdem wird durch verringerte Temperatur eine höhere Abgasmenge zurückgeführt, der Verbrauch sinkt und der Wirkungsgrad wird gesteigert.

In Ausgestaltung der Erfindung kann die Verbrennungskraftmaschine mit den in Reihe angeordneten Zylindern quer zur Fahrtrichtung angeordnet sein und die Abgaskrümmer der Zylinder in Fahrtrichtung gesehen sich hinter der Verbrennungskraftmaschine befinden. Dadurch ergeben sich besonders günstige Raumverhältnisse und die Führung der Abgasleitungen wird vereinfacht.

In Ausgestaltung der Erfindung kann das Ventil zum Absperren der Verbindungsleitung mit größerer Leitungslänge im Bereich des Bogens der Abgasleitung in Fahrtrichtung gesehen vor der Verbrennungskraftmaschine angeordnet sein; dadurch ergeben sich zusätzliche Kühlungsmöglichkeiten für diese Einrichtung, was für eine ordnungsgemäße Funktion wichtig ist. In diesem Fall ist die Entnahmestelle für das zurückzuführende Abgas zwischen dem Ventil und dem Katalysator angeordnet

Vorteilhaft ist dabei auch, dieses Ventil, in Strömungsrichtung der Abgase gesehen, vor oder hinter dem Bogen anzuordnen; abhängig davon, wo die besseren Kühlmöglichkeiten vorhanden sind.

Bevorzugt ist in der Abgasrückführungsleitung ein Proportionalventil angeordnet.

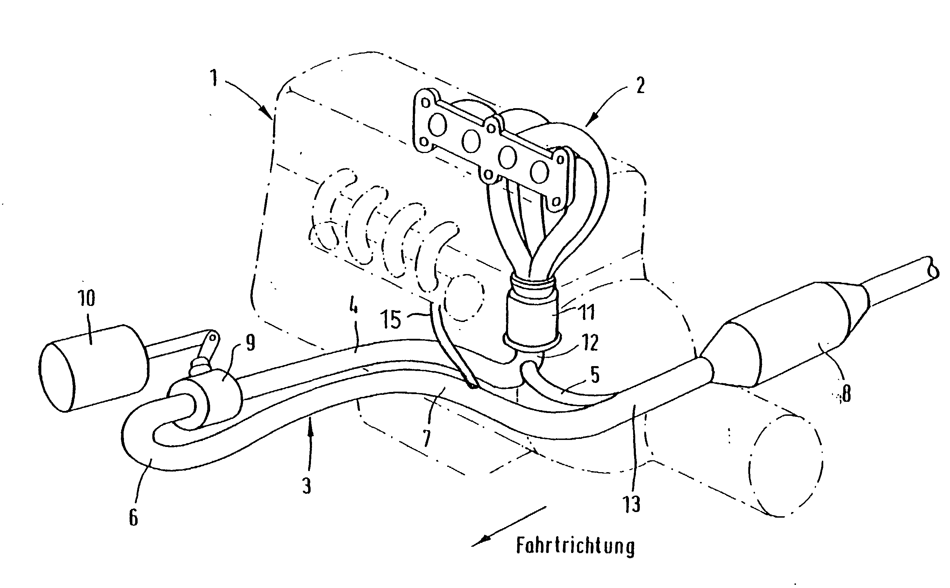

Ein Ausführungsbeispiel der Erfindung wird mit Bezug zu der Abbildung, welche eine perspektivische Darstellung der erfindungsgemäßen Anordnung mit einer Verbrennungskraftmaschine, den Abgasleitungen von der Verbrennungskraftmaschine zum Katalysator und der Abgasrückführungsleitung enthält, dargestellt.

Eine Verbrennungskraftmaschine 1 weist in Reihe angeordnete Zylinder auf; die Anordnung der Zylinderreihe erfolgt beim Ausführungsbeispiel, so wie in den Figuren dargestellt, quer zur Fahrtrichtung. Die Abgase der Verbrennungskraftmaschine werden über einen Abgaskrümmer 2 einem Entkoppelungselement 11 zugeleitet. Von dort werden die Abgase über eine Abgasleitung, die insgesamt mit 3 bezeichnet ist, einem Katalysator 8 zugeführt. Dieser Katalysator kann auch eine Einrichtung zur Reduktion der NOx-Bestandteile der Abgase bei magerem Betrieb der Verbrennungskraftmaschine enthalten.

Kurz nach dem Entkoppelungselement 11 ist eine Möglichkeit vorgesehen, die Abgase sowohl einer Zuleitung 4 mit größerer Leitungslänge zuzuführen, als auch einer Zuleitung 5, die auf kurzem Wege die Abgase einem Bereich 13 der Abgasleitung zuführt. Dabei entnimmt die Zuleitung 5 die Abgase der Zuleitung 4 in einem Bereich 12. Der Bereich 13 liegt bevorzugt in der Abgasleitung 7 kurz vor ihrer Einmündung in den Katalysator 8. Die Zuleitung 4 mit größerem Querschnitt verläuft dann in Fahrtrichtung zu einem bogenförmigen Bereich 6, der unterhalb der Verbrennungskraftmaschine 1 und in Fahrtrichtung gesehen vor der Verbrennungskraftmaschine 1 angeordnet ist. Die Weiterführung der Abgase erfolgt dann durch eine Abgasleitung 7, die entgegen der Fahrtrichtung verläuft und die Abgase dem Katalysator 8 zuführt.

Vor dem bogenförmigen Bereich 6 der Abgasleitung 3 ist ein Absperrventil 9 vorgesehen, das zwischen der Zuleitung 4 und dem bogenförmigen Bereich 6 liegt. Das Absperrventil 9 wird durch eine Betätigungsvorrichtung 10 betätigt. Die Anordnung des Absperrventils kann insbesondere dann, wenn die Kühlverhältnisse dort besser sind, auch nach dem bogenförmigen Bereich 6 erfolgen.

Zwischen der Entkopplungseinrichtung 11 und dem Katalysator 8 ist die Abgasrückführungsleitung 15 angeschlossen. Bevorzugt mündet die Abgasrückführungsleitung 15 nahe dem Bereich 13 ein. Sie enthält ein in der Zeichnung nicht dargestelltes Absperrventil, welches bevorzugt als Proportionalventil ausgebildet ist.

Beim Starten der Verbrennungskraftmaschine 1 sorgt die Betätigungsvorrichtung 10 für das Absperrventil 9 zunächst dafür, daß die Zuleitung 4 geschlossen ist. Dadurch gelangen die Abgase über die Zuleitung 5 auf kurzem Wege zum Katalysator 8 und sorgen hier für eine rasche Aufheizung desselben. Durch den Unterdruck in der Abgasrückführungsleitung 15 wird über den Abschnitt 13 und die Zuleitung 5 relativ kühles Abgas angesaugt. Abhängig von der Temperatur im Katalysator wird sodann über die Betätigungsvorrichtung 10 das Absperrventil 9 geöffnet, wodurch dann der Weg der Abgase über die Zuleitung 4, den bogenförmigen Bereich 6 und die Abgasleitung 7 frei wird. Da die Zuleitung 4 einen größeren Querschnitt aufweist als die Zuleitung 5, gelangt so der weitaus größere Teil der Abgase über die Zuleitung 4 und den bogenförmigen Bereich 6 zum Katalysator. Auch in dieser Betriebsart wird durch den Unterdruck in der Abgasrückführungsleitung 15 relativ kühles Abgas angesaugt, dann allerdings über den Bogen 6.

## Patentansprüche

1. Abgassystem für Kraftfahrzeuge mit einer Verbrennungskraftmaschine (1), bei dem die Abgase über einen Katalysator (8) zum Heckbereich des Kraftfahrzeuges geführt werden, wobei Abgasleitungen (3) der einzelnen Zylinder auf einer Seite der Verbrennungskraftmaschine (1) in einer Sammelleitung zusammengefaßt sind, von der zwei Zuleitungen (4,5) mit unterschiedlicher Leitungslänge zum Katalysator (8) führen und die Zuleitung (4) mit der größeren Leitungslänge durch ein Ventil (9) absperrbar ist, **dadurch gekennzeichnet, daß** von der längeren Zuleitung (4) wenigstens, eine Abgasrückführungsleitung (15) abzweigt.

2. Abgassystem nach Anspruch 1, **dadurch gekennzeichnet, daß** die Zuleitungen (4,5) unterschiedliche Querschnitte ausweisen, wobei die Zuleitung (4) mit dem größeren Querschnitt, unterhalb der Verbrennungskraftmaschine (1) in Fahrtrichtung des Kraftfahrzeuges vor und unter der Verbrennungskraftmaschine (1) angeordnet, einen bogenförmigen Bereich (6) aufweist und von dort die Abgasleitung (7) entgegen der Fahrtrichtung zu dem unterhalb des Passagierraumes angeordneten Katalysator (8) verläuft, wobei die Zuleitung (5) mit geringerein Querschnitt eine kurze Verbindung zwischen einem Bereich (12) der Sammelleitung (11) und einem dem Katalysator (8) benachbarten Bereich (13) der Abgasleitung (7) herstellt.

3. Abgassystem nach Anspruch 1, **dadurch gekennzeichnet, daß** die Verbrennungskraftmaschine (1) mit in Reihe angeordneten Zylindern quer zur Fahrtrichtung angeordnet ist und der Abgaskrümmer (2) der Zylinder in Fahrtrichtung gesehen sich hinter der Verbrennungskraftmaschine (1) befindet.

4. Abgassystem nach einem der Ansprüche 1 bis 3, **dadurch gekennzeichnet, daß** die Entnahmestelle für das zurückzuführende Abgas zwischen Abspenventil (9) und dem Katalysator (8) angeordnet ist.

5. Abgassystern nach einem der Ansprüche 1 bis 4, **dadurch gekennzeichnet, daß** das Absperrventil (9) im Bereich des Bogens (6) der Zuleitung (4) angeordnet ist.

6. Abgassystem nach einem der Ansprüche 1 bis 5, **dadurch gekennzeichnet, daß** in der Abgasrückführungsleitung (15) ein Proportionalventil angeordnet ist.

## Claims

1. Exhaust system for motor vehicles having an internal-combustion engine (1), in which the exhaust gases are passed over a catalytic converter (8) to the rear part of the motor vehicle, exhaust lines (3) from the individual cylinders on one side of the internal-combustion engine (1) being combined in a collection line, from which two feed lines (4, 5) of different lengths lead to the catalytic converter (8), and it being possible to block off the feed line (4) of greater length by means of a valve (9), **characterized in that** at least one exhaust-gas recirculation line (15) branches off from the longer feed line (4).

2. Exhaust system according to Claim 1, **characterized in that** the feed lines (4, 5) have different cross sections, the feed line (4) with the larger cross section, below the internal-combustion engine (1) having a bend (6) which, as seen in the direction of travel of the motor vehicle, is arranged in front of and below the internal-combustion engine (1), and from there the exhaust line (7) running in the opposite direction to the direction of travel to the catalytic converter (8), which is arranged beneath the passenger compartment, the feed line (4) of smaller cross section producing a short connection between an area (12) of the collection line (11) and an area (13) of the exhaust line (7) which is adjacent to the catalytic converter (8).

3. Exhaust system according to Claim 1, **characterized in that** the internal-combustion engine (1) is arranged with cylinders arranged in-line transversely with respect to the direction of travel, and the exhaust manifold (2) of the cylinders is situated behind the internal-combustion engine (1), as seen in the direction of travel.

4. Exhaust system according to one of Claims 1 to 3, **characterized in that** the removal point for the exhaust gas which is to be recirculated is arranged between the shut-off valve (9) and the catalytic converter (8).

5. Exhaust system according to one of Claims 1 to 4, **characterized in that** the shut-off valve (9) is arranged in the region of the bend (6) in the feed line (4).

6. Exhaust system according to one of Claims 1 to 5, **characterized in that** a proportional valve is arranged in the exhaust-gas recirculation line (15).

## Revendications

1. Système d'échappement pour véhicules à moteurs ayant un moteur à combustion interne (1), dans lequel les gaz d'échappement sont guidés par le biais d'un catalyseur (8) jusque dans la partie arrière du véhicule à moteur, des conduites de gaz d'échappement (3) des cylindres individuels étant rassemblées d'un côté du moteur à combustion interne (1) dans une conduite collectrice, depuis laquelle deux conduites d'alimentation (4, 5) de longueurs différentes conduisent au catalyseur (8) et la conduite d'alimentation (4) ayant la plus grande longueur pouvant être bloquée par une soupape (9), **caractérisé en ce qu'**au moins une conduite de reflux des gaz d'échappement (15) part de la conduite d'alimentation plus longue (4).

2. Système d'échappement selon la revendication 1, **caractérisé en ce que** les conduites d'alimentation (4, 5) présentent des sections transversales différentes, la conduite d'alimentation (4) ayant la plus grande section transversale, disposée en dessous du moteur à combustion interne (1) présentant une zone en forme de coude (6) dans la direction d'avance du véhicule à moteur avant le et en dessous du moteur à combustion interne (1), et la conduite de gaz d'échappement (7) s'étendant de là dans le sens inverse à la direction d'avance jusqu'au catalyseur (8) disposé sous l'habitacle des passagers, la conduite d'alimentation (5) ayant la section transversale plus petite créant une courte connexion entre une zone (12) de la conduite collectrice (11) et une zone (13) de la conduite de gaz d'échappement (7) voisine du catalyseur (8).

3. Système d'échappement selon la revendication 1, **caractérisé en ce que** le moteur à combustion interne (1) est disposé avec des cylindres en ligne transversalement à la direction d'avance et le collecteur de gaz d'échappement (2) des cylindres, vu dans la direction d'avance, se trouve derrière le moteur à combustion interne.

4. Système d'échappement selon l'une quelconque des revendications 1 à 3, **caractérisé en ce que** le point de prise pour les gaz d'échappement de reflux est disposé entre la soupape d'arrêt (9) et le catalyseur (8).

5. Système d'échappement selon l'une quelconque des revendications 1 à 4, **caractérisé en ce que** la soupape d'arrêt (9) est disposée dans la région du coude (6) de la conduite d'alimentation (4).

6. Système d'échappement selon l'une quelconque des revendications 1 à 5, **caractérisé en ce qu'**une soupape proportionnelle est disposée dans la conduite de reflux des gaz d'échappement (15).
